Europäisches Patentamt

European Patent Office

Office européen des brevets

(19)

(11) Numéro de publication: **0 246 964 B1**

(12) **FASCICULE DE BREVET EUROPEEN**

(45) Date de publication de fascicule du brevet:
**12.06.91**

(51) Int. Cl.⁵: **B01D 53/26**, F23J 15/00

(21) Numéro de dépôt: **87401118.2**

(22) Date de dépôt: **19.05.87**

(54) **Procédé et installation pour assécher des fumées avant leur évacuation.**

(30) Priorité: **22.05.86 FR 8607304**

(43) Date de publication de la demande:
**25.11.87 Bulletin 87/48**

(45) Mention de la délivrance du brevet:
**12.06.91 Bulletin 91/24**

(84) Etats contractants désignés:
**AT BE CH DE ES GB GR IT LI LU NL SE**

(56) Documents cités:
**EP-A- 0 102 770**
**DE-A- 2 263 319**
**DE-A- 2 406 467**
**US-A- 2 711 683**
**US-A- 4 241 874**

(73) Titulaire: **GAZ DE FRANCE**
**23, rue Philibert Delorme**
**F-75017 Paris(FR)**

(72) Inventeur: **Cordier, Rémy**
**163, avenue de la Résistance**
**F-92350 Le Plessis Robinson(FR)**
Inventeur: **Pelloux-Prayer, Dominique**
**63, avenue de Buzenval**
**F-92500 Rueil Malmaison(FR)**

(74) Mandataire: **Lerner, François**
**5, rue Jules Lefèbvre**
**F-75009 Paris(FR)**

## Description

L'invention concerne tout d'abord un procédé pour réduire la teneur en eau de fumées chargées en humidité et produites dans une chambre par une réaction de combustion.

L'invention est notamment destinée à être utilisée avec une chaudière à gaz du type à condensation.

On sait que la réaction de combustion du gaz naturel produit une quantité importante de vapeur d'eau à teneur non négligeable en acides, le tout étant véhiculé par les fumées. Si la température de paroi des conduits d'évacuation de ces fumées est inférieure au point de rosée desdites fumées, une partie de la vapeur d'eau contenue dans ces dernières se condense sur les parois, ce qui est particulièrement néfaste à leur tenue mécanique et peut entraîner des dégradations importantes de leur structure.

En particulier dans les chaudières à condensation, les produits de combustion ou "fumées" sont refroidi(e)s avant évacuation afin de récupérer une partie de la chaleur latente de la vapeur d'eau qu'elles contiennent. Aussi, les fumées qui sont évacuées sont saturées en humidité et d'autant plus susceptibles de condenser dans le conduit ou la cheminée, en les détériorant.

Afin d'éviter cet inconvénient, la technique connue prévoit différentes solutions.

Tout d'abord , on peut protéger les conduits par chemisage ou encore par tubage interne en y introduisant un tube étanche que l'on raccorde à la sortie de la chaudière et qui se substitue donc à l'ancien conduit pour l'évacuation des produits de combustion.

Cette solution se révèle en pratique coûteuse et difficile à mettre en oeuvre, notamment lorsque la longueur des conduits d'origine est importante.

D'autres solutions peuvent également être envisagées, telles que celles décrites aux brevets US-A-4 241 874 et US-A-2 711 683.

Au brevet US-A-2 711 683, est proposé un tubage interne de la cheminée d'évacuation des fumées de telle sorte que les fumées sortant de la chaudière soient canalisées dans le conduit interne de tubage autour duquel circule à contre-courant de l'air extérieur. En outre ce conduit de tubage est ouvert à sa base de telle sorte qu'une partie de l'air extérieur en circulation dans la cheminée puisse se mélange avec les fumées canalisées dans le conduit de tubage, l'air restant étant destiné à alimenter la chaudière.

Quant au brevet US-A-4 241 874, il décrit une installation comprenant :

- un circuit pour évacuer vers une cheminée des fumées chargées en humidité et produites par une chaudière,
- un premier échangeur thermique placé sur le circuit d'évacuation de ces fumées et dans lequel circule, en échange thermique, un certain volume d'air et les fumées provenant de la chambre de combustion de la chaudière,
- un second échangeur thermique placé à la suite du premier cité, sur le circuit d'évacuation desdites fumées et dans lequel circule, d'une part les fumées provenant du premier échangeur cité et, d'autre part, un débit d'air provenant de l'extérieur et duquel est issu ledit volume d'air en circulation dans le premier échangeur cité.

L'un des inconvénients notables des solutions proposées à ces deux brevets est que leur but n'est pas de lier la question du chauffage d'un volume d'air de dilution relativement sec avec celle de la diminution de la teneur en eau des fumées "humides". Or telle est justement l'une des originalités du procédé de l'invention dans lequel :

a) on fait ciculer des fumées provenant d'une chambre de combustion en échange thermique avec un volume d'air relativement sec admis à une température inférieure à celles des fumées sortant de la chambre, ledit volume d'air étant ainsi chauffé et les fumées résultantes refroidies,

b) on fait ensuite subir à ces fumées résultantes un nouvel échange thermique avec de l'air provenant de l'extérieur et duquel est issu ledit volume d'air relativement sec,

c) et on mélange les fumées résultantes ayant subi ledit nouvel échange thermique, avec le volume d'air relativement sec qui a circulé en échange thermique avec les fumées dans l'étape a), et on envoie vers la cheminée le mélange résultant.

Ainsi, par ce double échange thermique et cette dilution des fumées avec un volume d'air extérieur au moins partiellement recyclé, il va être possible de réduire très efficacement la teneur en eau de ces fumées en obtenant une quantité d'air nettement réchauffé qui va pouvoir être utilisé efficacement.

De préférence, selon une caractéristique complémentaire de l'invention, lors de l'échange thermique entre lesdites fumées résultantes et l'air extérieur, on condensera une partie de la vapeur d'eau contenue dans ces fumées et on éliminera les condensats formés.

Ainsi, le mélange air recyclé/fumées obtenu présentera d'autant plus une température sèche et une température de rosée assurant une évacuation vers la cheminée pratiquement sans risque de condensation.

Outre le procédé qui vient d'être présenté, l'invention concerne également, conformément aux revendi-

2

cations 6 à 11, une installation pour la mise en oeuvre de ce procédé. Cette installation se caractérise notamment en ce qu'elle comprend :

- un circuit de recyclage du volume d'air en circulation dans ledit premier échangeur, ce circuit de recyclage traversant ce premier échangeur et débouchant sur le circuit d'évacuation des fumées, en aval de la sortie de ces mêmes fumées du second échangeur.

L'invention apparaîtra encore plus clairement de la description qui va suivre faite en référence aux dessins d'accompagnement dans lesquels :

- la figure 1 illustre de façon schématique le circuit de l'installation de chauffage de l'invention ;
- la figure 2 présente un mode de réalisation des deux échangeurs de l'invention.

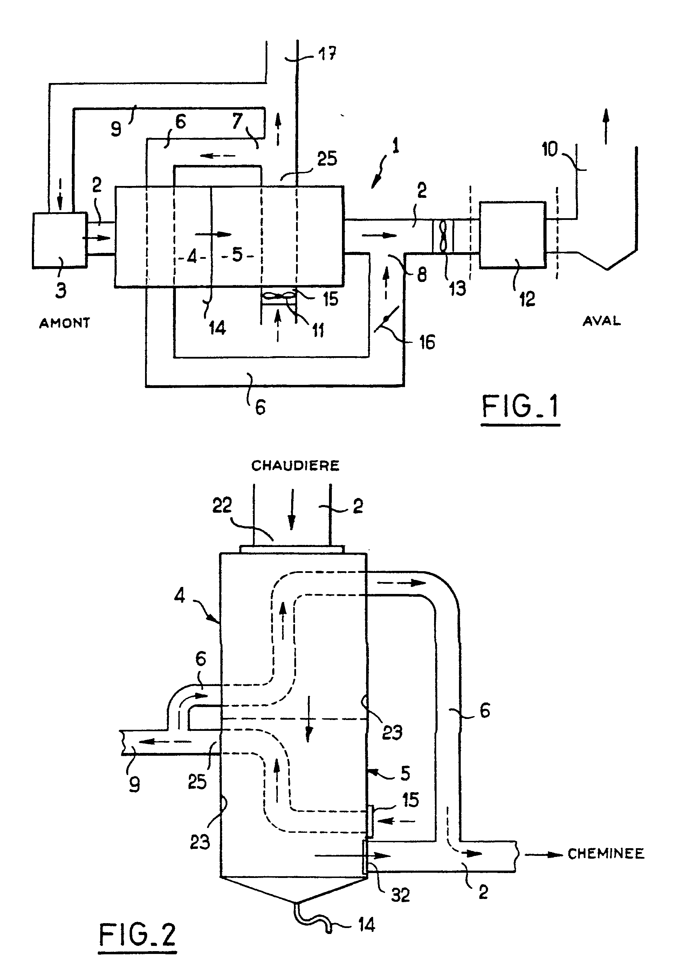

En se référant, tout d'abord, à la figure 1, on voit illustré le schéma du dispositif de l'invention, repéré 1, et destiné à assécher, avant leur évacuation à la cheminée, des fumées "humides" produites, dans ce cas, au niveau de la chambre de combustion d'une chaudière 3.

Le dispositif d'assèchement 1 comprend, notamment un circuit d'évacuation 2 des fumées issues du brûleur d'une chaudière 3 ainsi que deux échangeurs thermiques 4, 5, disposés en série sur le circuit d'évacuation 2.

Ce dispositif peut fonctionner avec tout type de chaudière.

Cependant, comme on le sait, les problèmes de condensation acides sont d'autant plus sensibles au niveau des conduits d'évacuation des fumées et/ou de la cheminée dans le cas où l'on utilise une chaudière à gaz du type à condensation. En effet, les fumées qui sont évacuées ont une température de sortie de chaudière relativement basse et sont fortement chargées en vapeur d'eau, laquelle vapeur va avoir tendance à se condenser et ainsi détériorer les conduits ou la cheminée si ceux-ci ne sont pas protégés.

C'est pourquoi, le dispositif d'assèchement des fumées conforme à la présente invention est, en particulier, destiné à être utilisé avec une chaudière à gaz et à condensation.

Avant de décrire de façon plus détaillée l'installation de l'invention, on notera, que l'on a représenté sur les figures les sens d'écoulement des fumées et de l'air, respectivement en trait plein et en traits tiretés. Par ailleurs, on a repéré figure 1 l'amont et l'aval du dispositif de l'invention.

Au voisinage de leur sortie de la chaudière 3, les fumées humides traversent les échangeurs 4 et 5, en circulant conformément au mode de réalisation illustré à la figure 1, d'abord dans l'échangeur air/fumées 4 (dit deuxième échangeur parce que disposé en second sur le chemin de circulation de l'air), puis dans l'échangeur, également air/fumées, 5 (dit premier échangeur parce que disposé en premier sur le chemin de circulation de l'air).

Cependant, si les conditions de fonctionnement et de rendement thermique le nécessitent, cet ordre peut être inversé; les fumées issues de la chaudière rencontrant, alors, d'abord l'échangeur 5, puis l'échangeur 4. Eventuellement on pourrait même ne prévoir que le seul échangeur 5.

Au niveau de cet échangeur 5, on fait circuler, avantageusement, au moyen d'un ventilateur 11, situé vers l'entrée d'air 15, les fumées en échange thermique avec un débit important d'air admis de l'extérieur à une température inférieure à la température de ces mêmes fumées. En fait, cette température d'admission sera, de façon générale, inférieure à la température de rosée de ces fumées.

Au cours de cet échange thermique, les fumées chauffent le débit d'air extérieur admis, tandis qu'une partie de la vapeur d'eau contenue dans les fumées se condense sur les parois de l'échangeur.

Les condensats formés sont alors éliminés et évacués en 14.

Vers la sortie d'air 25 de l'échangeur 5, une partie de l'air extérieur qui vient d'être chauffé est récupéré en 7 pour être recyclé, dans un circuit 6, de façon à être envoyé vers la cheminée 10.

Cet air recyclé débouche en 8 en aval des échangeurs sur le conduit 2 d'évacuation des fumées et se mélange à ces dernières qui viennent d'être partiellement déshydratées.

L'aspiration et le tirage de l'installation sont, notamment, assurés, ou facilités, par le ventilateur 13 disposé sur le conduit 2.

Avantageusement, ce ventilateur 13 ne fonctionne que lorsque la chaudière 3 est en marche. En d'autres termes son fonctionnement est interrompu à l'arrêt du brûleur. De cette façon on évite de refroidir par circulation d'air le conduit d'évacuation 2 des fumées ainsi que la cheminée 10 entre les cycles de chauffage, ce qui est thermiquement défavorable.

Préalablement à ce mélange, l'air recyclé circule à nouveau en échange thermique avec les fumées dans l'échangeur 4.

Cet échangeur 4 sert essentiellement à élever la température de l'air recyclé, lequel a déjà été préchauffé dans l'échangeur 5, au niveau duquel s'est effectué essentiellement la déshydratation des fumées.

De cette façon, on dilue les fumées, (en 8), avec de l'air chaud et relativement sec, ce qui permet de réduire, de façon sensible la teneur en eau résiduelle de ces fumées déjà partiellement déshydratées, et ce avant leur évacuation à la cheminée.

Comme on le comprend, si les fumées issues de la chaudière 3 rencontrent d'abord l'échangeur 4, l'air recyclé qui y circule sera porté à une température plus élevée que si ce même échangeur 4 est disposé en second sur le circuit des fumées après l'échangeur 5.

Avantageusement, les fumées circulent sans discontinuité d'un échangeur à l'autre, les deux échangeurs 4, 5 étant disposés l'un à la suite de l'autre.

Il est à noter que l'air extérieur qui a circulé dans l'échangeur 5 mais qui n'est par recyclé pour être dilué avec les fumées, peut être avantageusement renvoyé au moins en partie vers la chaudière 3 par l'intermédiaire du conduit 9. Si tel est le cas, on réalise une préchauffage de l'air de combustion du brûleur de la chaudière, ce qui est thermodynamiquement favorable.

Le débit d'air restant qui n'a pas été recyclé (en 6), ni éventuellement renvoyé vers la chaudière (3), est de préférence canalisé dans un conduit 17 qui peut notamment déboucher ou circuler dans un local à chauffer.

A titre d'exemple non limitatif, on peut prévoir que le débit d'air recyclé est sensiblement équivalent au débit des fumées produites par la chaudière, tandis que le débit d'air extérieur admis dans l'échangeur 5 est égal à environ cinq à dix fois le débit de ces mêmes fumées.

Toutefois, on notera que le débit d'air extérieur capté correspond avantageusement sensiblement au moins au débit nécessaire, d'une part à la dilution des fumées en aval des échangeurs et, d'autre part, à la combustion au niveau du brûleur de la chaudière. En d'autres termes, on adaptera le débit d'air extérieur aux conditions de fonctionnement désirées et recherchées. En particulier, on notera qu'un volet 16, disposé sur le conduit de recyclage 6 permet de faire varier et de régler le débit d'air de dilution.

Si les conditions de mise en place de l'installation, ainsi que les conditions climatiques sont défavorables, il peut être nécessaire de recourir à l'utilisation d'un surchauffeur 12 disposé sur le conduit 2 en aval des échangeurs 4, 5 et du raccordement 8. En effet, l'installation de "deshydratation" des fumées, conforme à l'invention est notamment destinée à être utilisée sur des installations complètes de chauffage préexistantes, et ce sans nécessiter de modifications importantes et fondamentales de celles-ci. Aussi, il est possible, en particulier, que les caractéristiques géométriques des conduits existants ne permettent pas, si la température extérieure est particulièrement basse, de réduire suffisamment les risques de condensation. Dans ce cas on surchauffera avantageusement le mélange dilué air recyclé/fumées partiellement deshydratées, notamment au moyen du surchauffeur 12. On pourrait aussi, par exemple, envisager de faire passer les fumées à proximité du brûleur de la chaudière.

Comme on le comprend, l'installation de l'invention disposée en amont du surchauffeur permet, de toute façon, de diminuer l'importance de cette surchauffe.

Si l'on se reporte maintenant à la figure 2, on voit un mode de réalisation et de construction des deux échangeurs 4, 5 de l'invention.

Tel qu'illustré, ces deux échangeurs sont disposés en série l'un en dessous de l'autre, les fumées circulant sans discontinuité de l'un à l'autre entre une admission 22 ménagée vers le sommet de l'échangeur 4 et une évacuation 32 formée vers la base de l'échangeur 5.

On note qu'avantageusement les fumées circulent à contre courant de la circulation d'air dans ces échangeurs (air extérieur ou air recyclé).

Cette réalisation "en pile" des deux échangeurs permet de ne prévoir qu'une évacuation 14 des condensats située vers la base de l'échangeur 5 (si celui-ci est disposé en second sur le circuit des fumées). En outre, bien que la déshydratation partielle des fumées s'effectue essentiellement au niveau de l'échangeur 5 par échange avec le débit d'air le plus important, si une première condensation des fumées survenait au niveau de l'échangeur 4, du fait de conditions particulières de fonctionnement de l'installation, les condensats formés ruisselleraient sur les parois extérieures 23 communes aux deux échangeurs et seraient éliminés et récupérés en 14.

Ces deux échangeurs peuvent être notamment fabriqués en matériau polymère.

De cette façon, on peut réaliser un ensemble compact de faible encombrement à efficacité élevée et venant s'insérer facilement entre la sortie de la chaudière et le carneau de raccordement à la cheminée.

A titre d'exemple non limitatif, on va maintenant présenter quelques résultats d'essais qui ont été menés avec l'installation de l'invention et qui sont résumés dans le tableau suivant :

| | | | | | | | | |
|---|---|---|---|---|---|---|---|---|
| tem | 41,5°C | 32° | 21° | 19° | 27° | 22° | 19° | 19° |
| te | 46°C | 38,5° | 31° | 27,5° | 32° | 29° | 27,5° | 27,5° |
| tre | 17°C | 17° | 16° | 18,5° | 10° | 12° | 15° | 18,5° |
| ta2 | 64°C | 50° | 39° | 32° | 43° | 38° | 35° | 32° |
| ta1 | 27,5°C | 28° | 24° | 25° | 15° | 18° | 22° | 25° |
| tfs | 28°C | 27° | 22,5° | 23° | 21° | 19,5° | 20,5° | 23° |
| tfe | 80°C | 60° | 45° | 35° | 55° | 47° | 40° | 35° |
| $\eta$ch | 96,5% | 100% | 105% | 107% | 102% | 104,5% | 106% | 107% |
| t°r.ch | 60°C | 45° | 30° | 18° | 40° | 32° | 24° | 18° |
| tae | -7°C | 2° | 11° | 18° | -7° | 2° | 11° | 18° |

Dans ce tableau :

- tae : représente la température d'admission de l'air extérieur,
- t°r.ch : représente la température de retour d'eau à la chaudière,
- $\eta$ch : correspond au rendement de la chaudière,
- tfe : représente la température des fumées en sortie chaudière (ou entrée premier échangeur sur le circuit des fumées),

- tfs : représente la température des fumées en sortie du second échangeur sur le circuit des fumées,
- ta$_1$ : représente la température de l'air extérieur après passage dans l'échangeur 5 "de déshydratation",
- ta$_2$ : représente la température de l'air recyclé en sortie de l'échangeur 4 de "réchauffage",
- tre : représente la température de rosée, du mélange air recyclé/fumées partiellement déshydratées,
- te : correspond à la température du mélange air recyclé/fumées partiellement déshydratées, et
- tem : représente la température limite du mélange air recyclé/fumées au dessus de laquelle le mélange ne peut se condenser sur les parois de la cheminée d'évacuation.

Il est à noter que ces essais ont été réalisés en diluant un débit Q de fumées, partiellement déshydratées en sortie des échangeurs 4, 5, avec un débit sensiblement équivalent Q d'air recyclé.

La puissance utile de la chaudière était, dans ce cas, d'environ 500 kW, la hauteur de la cheminée à section circulaire sensiblement égale à 20 m et son diamètre de l'ordre de 400 mm. En outre, cette cheminée était extérieure et maçonnée.

En outre, on notera, en complément au tableau ci-dessus, qu'à une température d'admission de l'air extérieur tae d'environ -7° C, la température de rosée des fumées au voisinage de l'entrée du premier échangeur rencontré par ces fumées est de l'ordre de 50° C, et que la teneur en eau de ces mêmes fumées d'environ 100 gr par kilogramme de fumées sèches.

De plus, en sortie des deux échangeurs, mais avant dilution, la température de rosée est alors d'environ 27° C, tandis que la teneur en eau a chuté à 24 gr par kilogramme de fumées sèches. L'efficacité des échangeurs "assécheurs" est donc d'environ 76 %.

Après dilution de ces fumées avec l'air de recyclage, la température de rosée des fumées est d'environ 17° C et la teneur en eau sensiblement égale à 12 gr par kilogramme de fumées sèches. On arrive donc à une efficacité de 88 % ; c'est-à-dire que l'on a éliminé 88 gr d'eau sur les 100 gr contenus à l'admission dans un kilograme de fumées sèches.

Il apparaît donc clairement que la diminution du risque de condensation des fumées "humides" produites par la chaudière est obtenue d'une part, par déshydratation partielle au niveau de l'un et/ou l'autre échangeur 4, 5, et, d'autre part, par dilution de ces fumées partiellement déshydratées avec l'air chaud recyclé.

Bien que la description de l'invention n'ait été faite qu'en référence à une réaction de combustion s'effectuant au niveau d'un brûleur de chaudière à combustible gazeux produisant des "fumées humides", on peut tout à fait envisager, sans sortir du cadre de l'invention, d'utiliser un combustible solide et/ou liquide, ou encore appliquer le procédé et le dispositif de l'invention pour assécher des "fumées" ou mélanges gazeux produits lors d'une réaction chimique quelconque au niveau d'une chambre de réaction.

Dans un tel cas, la récupération dans les conduits 9 et/ou 17 de l'air admis de l'extérieur et non recyclé en 6 après sa circulation dans l'échangeur 5, dépend, comme on le comprend, des conditions nécessaires au déroulement de la réaction chimique en question. Cet air peut être alors tout simplement évacué.

## Revendications

1. Procédé pour réduire la teneur en eau de fumées chargées en humidité produites dans une chambre (3) par une réaction de combustion, et dans lequel :

   a) on fait circuler les fumées provenant de la dite chambre en échange thermique avec un volume d'air relativement sec admis à une température inférieure à celle des fumées sortant de la chambre (3), ledit volume d'air étant ainsi chauffé et les fumées résultantes refroidies,

   b) on fait ensuite subir à ces fumées résultantes un nouvel échange thermique avec de l'air provenant de l'extérieur et duquel est issu ledit volume d'air relativement sec,

   c) et on mélange les fumées résultantes ayant subi ledit nouvel échange thermique, avec le volume d'air relativement sec qui a circulé en échange thermique avec les fumées dans l'étape a), et on envoie vers la cheminée le mélange résultant.

2. Procédé selon la revendication 1, caractérisé en ce que lors de l'échange thermique entre lesdites fumées résultantes et l'air extérieur, on condense une partie de la vapeur d'eau contenue dans ces fumées et on élimine les condensats formés.

3. Procédé selon l'une quelconque des revendications précédentes, caractérisé en ce qu'une partie de l'air extérieur qui circule en échange thermique avec les fumées résultantes est, après cet échange, récupéré et renvoyé vers la chambre (3) sans être mélangé avec lesdites fumées.

4. Procédé selon l'une quelconque des revendications précédentes, caractérisé en ce que l'air extérieur est admis avec un débit égal à environ 5 à 10 fois le débit desdites fumées résultantes, tandis que le débit de l'air relativement sec qui est mélangé à ces mêmes fumées est sensiblement égal au débit desdites fumées.

5. Procédé selon l'une quelconque des revendications précédentes, caractérisé en ce que ledit mélange résultant entre l'air chauffé et les fumées résultantes est surchauffé avant d'être évacué vers la cheminée.

6. Installation pour la mise en oeuvre du procédé selon l'une quelconque des revendications précédentes, du type destiné à réduire la teneur en eau de fumées chargées en humidité et produites dans une chambre (3) par une réaction de combustion, cette installation comprenant :
   - un circuit (2) pour évacuer les fumées vers une cheminée (10),
   - un échangeur thermique (4) placé sur le circuit d'évacuation de ces fumées et dans lequel circule, en échange thermique, un certain volume d'air et les fumées provenant de ladite chambre (3),
   - et un autre échangeur thermique (5) placé a la suite du premier cité, sur le circuit d'évacuation (2) desdites fumées et dans lequel circule d'une part les fumées provenant du premier échangeur cité (4) et, d'autre part, un débit d'air provenant de l'extérieur et duquel est issu ledit volume d'air en circulation dans le premier échangeur cité,
   ladite installation étant caractérisée en ce qu'elle comporte :
   - un circuit (6) de recyclage du volume d'air en circulation dans ledit premier échangeur (4), ce circuit de recyclage traversant ce premier échangeur (4) et débouchant sur le circuit (2) d'évacuation des fumées en aval de la sortie (32) de ces mêmes fumées dudit autre échangeur (5).

7. Installation selon la revendication 6, caractérisée en ce que ledit autre échangeur thermique (5) forme essentiellement condenseur pour la déshydratation partielle des fumées qui circulent en échange thermique avec ledit débit d'air extérieur lequel est admis à une température inférieure à celle des fumées, ledit autre échangeur (5) étant équipé à cet effet d'une conduite (14) d'évacuation des condensats formés.

8. Installation selon la revendication 6 ou la revendication 7 caractérisée en ce que les deux échangeurs thermiques (4, 5) sont disposés en série, l'un en dessous de l'autre, les fumées circulant sans discontinuité d'un échangeur à l'autre à contre-courant de la circulation d'air.

9. Installation selon l'une quelconque des revendications 6 à 8, caractérisée en ce que le circuit (6) de recyclage d'air comprend au moins un volet (16) de réglage du débit d'air recyclé.

10. Installation selon l'une quelconque des revendications 6 à 9, caractérisée en ce qu'elle comprend un surchauffeur (12) disposé sur le circuit (2) d'évacuation des fumées, en aval du raccordement du circuit (6) de recyclage d'air.

11. Installation selon l'une quelconque des revendications 6 à 10, caractérisée en ce qu'on prévoit, pour la circulation de l'air et/ou des fumées, au moins un ventilateur (11, 13) dont le fonctionnement est interrompu lorsque la réaction de combustion dans la chambre (3) est interrompue.

## Claims

1. Process for reducing the water content of gases charged with moisture produced in a chamber (3) by a combustion reaction, and in which:
   a) the gases from the said chamber are circulated in heat exchange with a volume of relatively dry air admitted at a temperature which is lower than that of the gases leaving the chamber (3), the said volume of air thus being heated and the resultant gases cooled;

7

b) these gases are then subjected to a second heat exchange process with air which comes from the exterior and from which the said volume of relatively dry air is taken; and

c) the resultant gases which were subjected to the said second heat exchange process are mixed with the volume of relatively dry air which circulated in heat exchange with the gases from stage a), and the resultant mixture is conveyed towards the flue.

2. Process according to claim 1, characterised in that during the heat exchange between the said resultant gases and the external air, some of the water vapour present in these gases is condensed and the condensates formed are removed.

3. Process according to either of the preceding claims, characterised in that some of the external air circulating in heat exchange with the resultant gases is recovered after the heat exchange stage and returned to the chamber (3) without being mixed with the said gases.

4. Process according to any one of the preceding claims, characterised in that the external air is admitted at a flow rate which is approximately 5 to 10 times the flow rate of the said resultant gases, whilst the flow rate of the relatively dry air which is mixed with these same gases is substantially equal to the flow rate of the said gases.

5. Process according to any one of the preceding claims, characterised in that the said mixture resulting from the heated air and the resultant gases is superheated before being discharged towards the flue.

6. Installation for performing the process according to any one of the preceding claims, of the type intended for reducing the water content of gases charged with moisture and produced in a chamber (3) by a combustion reaction, this installation comprising:
   - a circuit (2) for discharging the gases to a flue (10);
   - a heat exchanger (4) located in the circuit which discharges these gases and in which a given volumn of air and the gases from the said chamber (3) circulate in heat exchange; and
   - a further heat exchanger (5) which is located after the above-mentioned first heat exchanger, in the discharge circuit (2) for the said gases and in which there circulate both the gases from the said first heat exchanger (4) and an air flow which comes from the exterior and from which there derives the said volume of air circulating in the said first heat exchanger; the said installation being characterised in that it comprises:
   - a circuit (6) for recycling the air volume circulating in the said first heat exchanger (4), this recycling circuit passing through this first heat exchanger (4) and opening into the circuit (2) for discharging the gases downstream of the outlet (32) for these same gases from the said second heat exchanger (5).

7. Installation according to claim 6, characterised in that the said second heat exchanger (5) essentially forms a condenser for the partial dehydration of the gases circulating in heat exchange with the said external air flow which is admitted at a temperature which is lower than that of the gases, the said second heat exchanger (5) being provided for this purpose with a conduit (14) for discharging the condensates formed.

8. Installation according to claim 6 or claim 7, characterised in that the two heat exchangers (4, 5) are arranged in series, one below the other, the gases circulating continuously from one heat exchanger to the other in counter-current with respect to the air circulation.

9. Installation according to any one of claims 6 to 8, characterised in that the air recycling circuit (6) comprises at least one flap (16) for regulating the flow rate of the recycled air.

10. Installation according to any one of claims 6 to 9, characterised in that it comprises a superheating device (12) disposed on the gas discharging circuit (2) downstream of the union of the air recycling circuit (6).

11. Installation according to any one of claims 6 to 10, characterised in that at least one fan (11, 13), of which the operation is interrupted when the combustion reaction in the chamber (3) is interrupted, is provided for the circulation of the air and/or of the gases.

8

**Ansprüche**

1. Verfahren zum Verringern des Wassergehaltes von feuchtigkeitshaltigen Rauchgasen, die in einer Kammer (3) durch eine Verbrennungsreaktion erzeugt werden, bei welcher:

   a) man die Rauchgase, die aus der Kammer kommen, im Wärmeaustausch mit einem Volumen von relativ trockener Luft zirkulieren läßt, die bei einer Temperatur zugeführt wird, die niedriger als die der Rauchgase ist, welche aus der Kammer (3) austreten, wobei das Volumen an Luft so erwärmt wird und die sich ergebenden Rauchgase abgekühlt werden,

   b) man dann diese sich ergebenden Rauchgase einem erneuten Wärmeaustausch mit der Luft unterwirft, die von außen kommt und von der das Volumen der relativ trockenen Luft stammt,

   c) und man die sich ergebenden Rauchgase, die dem erneuten Wärmeaustausch unterworfen wurden, mit dem Volumen an relativ trockener Luft mischt, welche im Wärmeaustausch mit den Rauchgasen in der Stufe a) zirkuliert ist, und man das sich ergebende Gemisch zum Kamin hin führt.

2. Verfahren nach Anspruch 1, dadurch gekennzeichnet, daß während des Wärmeaustausches zwischen den sich ergebenden Rauchgasen und der Außenluft ein Teil des Wasserdampfes kondensiert wird, der in diesen Rauchgasen enthalten ist, und die gebildeten Kondensate entfernt werden.

3. Verfahren nach einem der vorhergehenden Ansprüche, dadurch gekennzeichnet, daß ein Teil der Außenluft, der im Wärmeaustausch mit den sich ergebenden Rauchgasen umläuft, nach diesem Wärmeaustausch wiedergewonnen wird und zu der Kammer (3) geführt wird, ohne mit den Rauchgasen gemischt zu werden.

4. Verfahren nach einem der vorhergehenden Ansprüche, dadurch gekennzeichnet, daß die Außenluft mit einer Menge etwa gleich der fünf- bis zehnfachen Menge der sich ergebenden Rauchgase zugeführt wird, während die Menge der relativ trockenen Luft, die mit eben diesen Rauchgasen vermischt wird, im wesentlichen gleich der Menge der Rauchgase ist.

5. Verfahren nach einem der vorhergehenden Ansprüche, dadurch gekennzeichnet, daß das sich ergebende Gemisch zwischen der erwärmten Luft und den sich ergebenden Rauchgasen vor dem Abziehen zum Kamin hin überhitzt wird.

6. Anlage zur Durchführung des Verfahrens nach einem der vorhergehenden Ansprüche zum Verringern des Wassergehaltes von feuchtigkeitshaltigen Rauchgasen, die in einer Kammer (3) durch eine Verbrennungsreaktion erzeugt werden, wobei diese Anlage aufweist:

   - einen Kreislauf (2) zum Abziehen der Rauchgase zu einem Kamin (10) hin,

   - einen Wärmeaustauscher (4), der am Abzugskreislauf dieser Rauchgase angeordnet ist und in welchem im Wärmeaustausch ein gewisses Volumen Luft und die aus dieser Kammer (3) stammenden Rauchgase umlaufen,

   - und einen anderen Wärmeaustauscher (5), der hinter dem genannten ersten angeordnet ist am Abzugskreislauf (2) der Rauchgase und in welchem einerseits die aus dem genannten ersten Wärmeaustauscher (4) kommenden Rauchgase und andererseits eine Menge Luft umlaufen, die von außen kommt und von welcher das im genannten ersten Austauscher zirkulierende Luftvolumen stammt,

   wobei die Anlage dadurch gekennzeichnet ist, daß sie aufweist:

   - einen Kreislauf (6) für das Rezyklieren des Luftvolumens bei der Zirkulation in dem ersten Austauscher (4), wobei dieser Rezyklierkreislauf diesen ersten Austauscher (4) durchquert und in dem Abzugskreislauf (2) für die Rauchgase abstromig vom Ausgang (32) eben dieser Rauchgase des anderen Wärmetauschers (5) mündet.

7. Anlage nach Anspruch 6, dadurch gekennzeichnet, daß der andere Wärmetauscher (5) im wesentlichen den Kondensator für die teilweise Dehydratisierung der Rauchgase bildet, welche im Wärmeaustausch mit der Menge Außenluft zirkulieren, die bei einer Temperatur zugeführt wird, die kleiner ist als die der Rauchgase, wobei der andere Austauscher (5) hierfür mit einer Abzugsleitung (14) für die gebildeten Kondensate ausgestattet ist.

8. Anlage nach Anspruch 6 oder Anspruch 7, dadurch gekennzeichnet, daß die zwei Wärmetauscher (4, 5) in Serie, einer unter dem anderen, angeordnet sind, wobei die Rauchgase kontinuierlich von einem Austauscher zum anderen im Gegenstrom zur Luftzirkulation umlaufen.

9. Anlage nach einem der Ansprüche 6 bis 8, dadurch gekennzeichnet, daß der Rezyklierkreislauf (6) für Luft mindestens eine Regelklappe (16) für den Durchsatz rezyklierter Luft aufweist.

10. Anlage nach einem der Ansprüche 6 bis 9, dadurch gekennzeichnet, daß sie einen Überhitzer (12) aufweist, der an dem Abzugskreislauf (2) für die Rauchgase abstromig von der Verbindung des Rezyklierkreislaufes (6) für Luft angeordnet ist.

11. Anlage nach einem der Ansprüche 6 bis 10, dadurch gekennzeichnet, daß für die Zirkulation von Luft und/oder Rauchgasen mindestens ein Ventilator (11, 13) vorgesehen ist, dessen Betrieb unterbrochen wird, wenn die Verbrennungsreaktion in der Kammer (3) unterbrochen wird.

FIG.1

FIG.2